# EUROPEAN PATENT SPECIFICATION

(11) **EP 0 402 326 B1**
(45) Date of publication and mention of the grant of the patent: **20.04.1994**
(21) Application number: 90830243.3
(22) Date of filing: 31.05.1990
(51) Int. Cl.: A47J 31/06

(54) **Adjustable percolator holder for espresso coffee making machines**
Verstellbarer Brühkopf für Espresso-Kaffeemaschinen
Dispositif porte-filtre réglable pour machines à café express

(30) Priority: 08.06.1989 IT 2083189
(43) Date of publication of application: 12.12.1990
(73) Proprietor: CIMBALI S.p.A., I-20082 Binasco (MI) (IT)
(72) Inventor: Locati, Santino, c/o Cimbali S.p.A., I-20082 Binasco, Milano (IT)
(74) Representative: Cicogna, Franco

(56) References cited:
- EP-A- 0 097 129
- GB-A- 136 174
- GB-A- 147 559

## Description

The present invention relates to an adjustable percolator holder for espresso coffee making machines.

As is known, conventional percolator holders provided for engaging coffee infusion delivery assemblies of espresso coffee making machines, usually comprise a hollow body which ends with one or two bottom spouts and wherein a coffee powder percolator is housed.

This percolator is in turn formed by a hollow body including a bottom microperforated wall and designed for receiving either one or two coffee powder doses, depending on the percolator holder to which it is coupled.

Also known is the fact that the coffee powder dose used for preparing an espresso coffee cup has a weight which changes within broad limits, depending on the infusion type and the like.

Accordingly, it is at present necessary to provide for the availability of different size percolator holders to be associated with automatic espresso coffee making machines provided for public coffee delivery shops.

The document GB-A-136 174 discloses an adjustable percolator holder having substantially the features of the preamble of the main claim.

Accordingly, the aim of the present invention is to overcome the above mentioned drawback bv providing a coffee powder percolator holder which can be easily applied to espresso coffee making machines and which has a coffee powder holding volume which can be changed in a continuous manner depending on contingent requirements.

Within the scope of the above mentioned aim, a main object of the present invention is to provide such a coffee powder percolator holder, for application on automatic espresso coffee making machines, which is also adapted to operate as a percolator.

Yet another object of the present invention is to provide an adjustable coffee powder percolator holder which is of very simple construction and very reliable in operation.

According to one aspect of the present invention, the above mentioned aim and objects, as well as yet other objects which will become more apparent hereinafter are achieved by an adjustable percolator holder for espresso coffee making machines having the features of the characterizing portion of the main claim.

### BRIEF DESCRIPTION OF THE DRAWINGS

Further characteristics and advantages of the adjustable coffee powder percolator holder according to the present invention will become more apparent from the following detailed disclosure of a preferred, though not exclusive, embodiment of the percolator holder which is illustrated, by way of an indicative but not limitative example, in the figures of the accompanying drawing where:
Figure 1 is a cross-sectional view illustrating a coffee powder percolator holder including two delivery spouts; and
Figure 2 is another cross-sectional view illustrating a coffee powder percolator holder including a single coffee infusion delivery spout.

### DESCRIPTION OF THE PREFERRED EMBODIMENTS

With reference to the figures of the accompanying drawing, the adjustable percolator holder for espresso coffee making machines according to the invention, which overall has been indicated with reference number 1, comprises a round cross-section tubular body 2 which can be removably coupled to a conventional coffee infusion delivery assembly (not shown).

This tubular body is conventionally provided with a radial lug 3 defining a restraining seat for the end portion of a handle and is provided, at the top thereof, with two coupling or latching perimetrical ridges (not shown).

The tubular body is moreover provided with a bottom portion 2' having a larger cross-section and being provided with an inner thread.

To this threaded portion of the tubular body there is screwed or helically coupled the bottom portion 4', likewise threaded, of a cylindrical body 4.

More specifically, this cylindrical body defines either one or two chambers 5, of substantially frustum of cone shape, which are opened downwardly by corresponding coffee infusion delivery spouts 6.

The mentioned cylindrical body, moreover, supports, at the top portion thereof, a microperforated sheet metal disc element 7 adapted to operate as a percolator and the proper locating of which is assured by a resilient or spring stainless steel ring member 8.

In this connection it should be pointed out that the above mentioned cylindrical body has a height which will depend on the number of the coffee infusion delivery spouts and that the tightness coupling between the wall of said cylindrical body and the inner wall of the tubular body is provided by a suitable O-ring gasket 9 made of any suitable material.

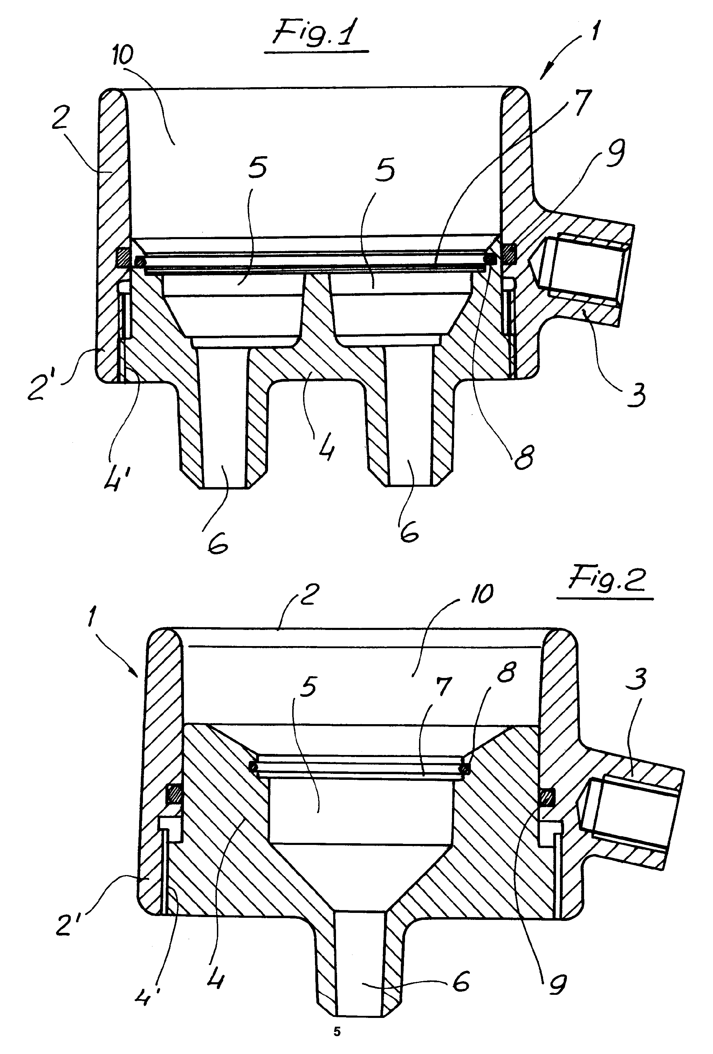

More specifically, the height of the cylindrical body will be related to the use of the percolator holder, that is for preparing either two coffee cups (as is shown in figure 1) or a single coffee cup (as is shown in figure 2).

The chamber 10 defined by the wall of the tubular body 2 and by the percolator 7 is provided for directly receiving the coffee powder so as to replace conventional one or two-dose percolators.

According to the invention, the coffee holding volume of this chamber can be changed within very broad limits, depending on the requirements, by screwing in a suitably desired way the cylindrical body into the mentioned tubular body.

From the above disclosure it should be apparent that the invention fully achieves the intended aim and objects.

## Claims

1. An adjustable percolator (7) holder (1) for espresso coffee making machines, comprising a tubular body (2) including conventional percolator holder engaging means and wherein there is engaged, by a helical type of coupling, a cylindrical body (4) defining at least a coffee infusion delivery spout, said body directly supporting said percolator (7), said tubular body (2) having a round cross-section and being so designed as to be removably coupled to a conventional coffee infusion delivery assembly of an espresso coffee making machine, said tubular body (2) having a larger cross-section bottom portion (2') which is provided with an inner threaded portion, characterized in that with said threaded portion there is screw engaged a threaded bottom portion (4') of said cylindrical body (4), said cylindrical body defining two substantially frustum of cone shaped chambers (5) opened downwardly by corresponding coffee infusion delivery spouts (6), said tubular body (2) having an inner wall defining, with said percolator (7), a powder coffee receiving chamber (10) the volume of which can be varied by screwing said cylindrical body (4) into said tubular body (2).

2. An adjustable percolator holder according to Claim 1, characterized in that said cylindrical body (2) supports, at the top portion thereof, a microperforated sheet metal disc (7), adapted to operate as said percolator (7) and held in position by a spring stainless steel ring member (8).

3. An adjustable percolator holder according to Claims 1 and 2, characterized in that said cylindrical body (2) has a height which depends on the number of said delivery spouts (6) included on said cylindrical body (4), an O-ring member (9) being sealingly engaged between the wall of said cylindrical body (4) and said inner wall of said tubular body (2).

## Patentansprüche

1. Ein einstellbarer Halter (1) für Tropffilter (7) für Espresso-Kaffeemaschinen, umfassend einen röhrenförmigen Körper (2) mit einer herkömmlichen Tropffilterhalter-Einklinkvorrichtung, und in den durch eine helikoidale Kupplungsanordnung ein zylindrischer Körper (4) eingeklinkt ist, der mindestens eine Kaffeespendeaustrittsöffnung definiert; dieser Körper trägt unmittelbar diesen Tropffilter (7); dieser röhrenförmige Körper (2) besitzt einen runden Querschnitt und ist so entworfen, daß er entfernbar an eine herkömmliche Kaffeespendemontage einer Espresso-Kaffeemaschine angebracht werden kann; dieser röhrenförmige Körper (2) besitzt eine untere Partie (2') größeren Querschnitts, mit einem innen gewindeten Teil bereitgestellt, dadurch gekennzeichnet, daß mit diesem gewindeten Teil ein gewindetes Teil (4') dieses zylindrischen Körpers (4) verschraubt ist; dieser zylindrische Körper definiert zwei im wesentlichen kegelstumpfförmige Kammern (5), die nach unten durch entsprechende Kaffeespendeaustrittsöffnungen (6) geöffnet sind; dieser röhrenförmige Körper (2) besitzt eine Innenwand, die mit diesem Tropffilter (7) eine Kaffeemehlaufnahmekammer (10) definiert, deren Volumen durch Schrauben dieses zylindrischen Körpers (4) in diesen röhrenförmigen Körper (2) hinein verändert werden kann.

2. Ein einstellbarer Tropffilterhalter gemäß Anspruch 1, dadurch gekennzeichnet, daß dieser zylindrischer Körper (4) an seinem oberen Ende eine mikroperforierte Metallscheibe (7) trägt, die angepaßt ist, als dieser Tropffilter (7) zu wirken, und die durch ein federndes Ringteil (8) aus Edelstahl in ihrer Position gehalten wird.

3. Ein einstellbarer Tropffilterhalter gemäß Ansprüche 1 und 2, dadurch gekennzeichnet, daß dieser zylindrische Körper (4) eine Höhe besitzt, die von der Anzahl dieser Spendeaustrittsöffnungen (6) auf diesem zylindrischen Körper (4) abhängt, dabei ist ein O-Ringteil (9) dichtend zwischen der Wand dieses zylindrischen Körpers (4) und dieser Innenwand dieses röhrenförmigen Körpers (2) angebracht.

## Revendications

1. Un porteur (1) ajustable de percolateur (7) pour machines à café espresso, comprenant un corps tubulaire (2) comprenant un dispositif d'enclenchement pour porte-percolateurs classique et dans lequel un corps cylindrique (4) définant au moins un bec de livraison de café est enclenché au moyen d'un type d'accouplement helicoïdal, ledit corps supportant directement ledit percolateur (7), ledit corps tubulaire (2) ayant une coupe transversale ronde et étant dessiné de telle manière qu'il peut être accouplé amoviblement à un assemblage de livraison de café conventionnel d'une machine à café espresso, ledit corps tubulaire (2) ayant une partie inférieure (2') à coupe transversale majeure qui est pourvue d'une partie intérieure filetée, caractérisée en ce qu'à ladite partie filetée une partie inférieure (4') filetée dudit corps cylindrique (4) est vissée, ledit corps cylindrique définant deux chambres (5) substantiellement en forme de tronc de cône qui s'ouvrent vers le bas avec des becs de livraison de café (6) correspondants, ledit corps tubulaire (2) ayant une paroi intérieure définant avec ledit percolateur (7) une chambre réceptrice (10) pour la poudre de café le volume de laquelle peut être varié en vissant ledit corps cylindrique (4) dans ledit corps tubulaire (2).

2. Un porte-percolateur ajustable selon la Revendication 1, caractérisé en ce que ledit corps cylindrique (4) porte en haut un disque (7) en feuille métallique microperforée adapté à opérer comme ledit percolateur (7) et maintenu en position par un élément annulaire à ressort (8) en acier inoxydable.

3. Un porte-percolateur ajustable selon les Revendications 1 et 2, caractérisé en ce que ledit corps cylindrique (4) a une hauteur qui dépend du nombre desdits becs de livraison (6) compris sur ledit corps cylindrique (4), un joint torique d'étanchéité (9) étant étanchement accroché au milieu de la paroi dudit corps cylindrique (4) et de ladite paroi intérieure dudit corps tubulaire (2).
